# EUROPÄISCHE PATENTSCHRIFT

(11) **EP 3 616 951 B1**
(45) Veröffentlichungstag und Bekanntmachung des Hinweises auf die Patenterteilung: **30.03.2022**
(21) Anmeldenummer: 19192788.8
(22) Anmeldetag: 21.08.2019
(51) Int. Cl.: B60J 3/00

(54) **KRAFTFAHRZEUG AUFWEISEND EINE WINDSCHUTZSCHEIBE, VORZUGSWEISE EIN NUTZFAHRZEUG**
MOTOR VEHICLE HAVING A WINDSCREEN, PREFERABLY A COMMERCIAL VEHICLE
VÉHICULE AUTOMOBILE AYANT UN PARE-BRISE, DE PRÉFÉRENCE POUR VÉHICULE UTILITAIRE

(30) Priorität: 30.08.2018 DE 102018121217
(43) Veröffentlichungstag der Anmeldung: 04.03.2020
(73) Patentinhaber: MAN Truck & Bus SE, 80995 München (DE)
(72) Erfinder: Rohrmüller, Hans, 82216 Maisach (DE); Kondic, Darko, 85757 Karlsfeld (DE)
(74) Vertreter: v. Bezold & Partner Patentanwälte - PartG mbB

(56) Entgegenhaltungen:
- WO-A1-2017/115039
- CA-A1- 2 153 734
- GB-A- 325 237

## Beschreibung

Die Erfindung betrifft ein Kraftfahrzeug aufweisend eine Windschutzscheibe, vorzugsweise ein Nutzfahrzeug.

Windschutzscheiben bzw. Frontscheiben von Kraftfahrzeugen können einen transparenten Hauptsichtbereich, der die Sicht auf den vorausliegenden Verkehr ermöglicht, und einen intransparenten, oberen Bereich, der beispielsweise eine Blendung des Fahrers bei hellem Außenlicht verhindert, aufweisen.

Eine Windschutzscheibe für ein Kraftfahrzeug ist beispielsweise durch die DE 10 2016 124 987 A1 offenbart.

Die WO 2017/115039 A1 offenbart eine Fahrzeug-Verbundverglasung mit einer AMOLED-Anzeige zwischen den Innenflächen der Verglasungsplatten, wobei die AMOLED- Anzeige in einem ausgedehnten keramischen Maskierungsbereich angeordnet ist.

Der Erfindung liegt die Aufgabe zu Grunde, eine alternative und/oder verbesserte Windschutzscheibe für ein Kraftfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Windschutzscheibe ist für ein Kraftfahrzeug, vorzugsweise ein Nutzfahrzeug (z. B. Lastkraftwagen oder Omnibus) geeignet. Die Windschutzscheibe weist einen transparenten (durchsichtigen) Hauptsichtbereich auf. Der Hauptsichtbereich ist in einer Vertikalrichtung nach oben durch eine obere Begrenzungskurve begrenzt. Die obere Begrenzungskurve verläuft auf einer Beifahrerseite der Windschutzscheibe und einer Fahrerseite der Windschutzscheibe unterschiedlich hoch (bzw. in unterschiedlicher Höhe). Alternativ oder zusätzlich weist die Windschutzscheibe einen, vorzugsweise im Wesentlichen intransparenten (undurchsichtigen) oder getönten, oberen Bereich auf. Der obere Bereich weist eine geringere Lichttransmission als ein Hauptsichtbereich der Windschutzscheibe auf. Der obere Bereich ist in einer Vertikalrichtung nach unten durch eine untere Begrenzungskurve begrenzt. Die untere Begrenzungskurve verläuft auf einer Beifahrerseite der Windschutzscheibe und einer Fahrerseite der Windschutzscheibe unterschiedlich hoch (bzw. in unterschiedlicher Höhe).

Die Windschutzscheibe kann die Vorteile eines hohen, transparenten Hauptsichtbereichs mit denen eines tiefen, intransparenten Bereichs je nach Anwendungsfall verbinden. Beispielsweise kann ein Hauptsichtbereich in relativ großer Höhe auf der Beifahrerseite der Windschutzscheibe einen Blick nach vorne auch bei einem aufrechten oder nahezu aufrechten Aussteigen durch eine hohe Beifahrertür ermöglichen. Dies kann aus Sicherheitsgründen vorteilhaft sein, um direkt vor dem Aussteigen den umgebenden Verkehr aus aufrechter Haltung beobachten zu können. Zusätzlich kann z. B. auch eine Sicht auf eine Ampelanlage ermöglicht werden. Ein beispielsweise intransparenter oder getönter oberer Bereich in relativ geringer Höhe auf der Fahrerseite der Windschutzscheibe kann eine Energiebilanz des Fahrzeugs beim Heizen oder Kühlen verbessern. Es können weniger Sonnenstrahlen zum Aufheizen in das Fahrerhaus einfallen oder weniger Wärmeenergie nach außen abgegeben werden. Der Effekt kann durch Anordnung von Einbau- und Bedienelementen nahe dem oberen Bereich verstärkt werden, da diese dort ebenfalls wärmedämmend wirkend können. Zusätzlich können die Einbau- und Bedienelement hinter dem oberen Bereich leicht für einen sitzenden Fahrer des Kraftfahrzeugs zugänglich sein.

Zweckmäßig kann die Windschutzscheibe eine Fahrzeugfrontscheibe sein.

Beispielsweise kann die obere und/oder die untere Begrenzungskurve als (dünnlinige) Kurve und/oder als dickliniges Band ausgeführt sein. Beispielsweise kann ein Band einen stetigen und/oder unstetigen Übergang zwischen transparenten und intransparenten Bereich aufweisen.

Es ist möglich, dass der obere Bereich die Windschutzscheibe nach oben hin begrenzt.

In einem Ausführungsbeispiel verläuft die obere Begrenzungskurve auf der Beifahrerseite höher als auf der Fahrerseite und/oder die untere Begrenzungskurve verläuft auf der Beifahrerseite höher als auf der Fahrerseite.

In einem weiteren Ausführungsbeispiel verläuft die obere Begrenzungskurve und/oder die untere Begrenzungskurve asymmetrisch.

In einem weiteren Ausführungsbeispiel verläuft die obere Begrenzungskurve und/oder die untere Begrenzungskurve auf der Beifahrerseite um mindestens 20 cm, vorzugsweise um mindestens 25 cm, höher als auf der Fahrerseite.

Es ist auch möglich, dass die obere Begrenzungskurve und/oder die untere Begrenzungskurve auf der Beifahrerseite um rund 30 cm ± 10%, vorzugsweise ± 5 %, und/oder zwischen 15 % und 35 %, vorzugsweise zwischen 20 % und 30 %, einer Gesamthöhe der Windschutzscheibe höher verläuft als auf der Fahrerseite.

In einem weiteren Ausführungsbeispiel verläuft die obere Begrenzungskurve und/oder die untere Begrenzungskurve auf der Fahrerseite über eine Länge in einem Bereich zwischen 90 cm und 140 cm, vorzugsweise zwischen 100 cm und 120 cm.

Es ist auch möglich, dass die obere Begrenzungskurve und/oder die untere Begrenzungskurve auf der Fahrerseite über eine Länge für rund 110 cm ± 10 %, vorzugsweise ± 5 %, und/oder in einem Bereich zwischen 40 % und 50 %, vorzugsweise zwischen 45 % und 50 %, von einer Gesamtbreite der Windschutzscheibe auf gleichbleibender Höhe geradlinig verläuft.

In einem weiteren Ausführungsbeispiel verläuft die obere Begrenzungskurve und/oder die untere Begrenzungskurve auf der Beifahrerseite über eine Länge in einem Bereich zwischen 20 cm und 60 cm, vorzugsweise zwischen 30 cm und 50 cm (z. B. rund 40 cm ± 10%, vorzugsweise ± 5 %), auf gleichbleibender Höhe geradlinig.

Es ist auch möglich, dass die obere Begrenzungskurve und/oder die untere Begrenzungskurve auf der Beifahrerseite über eine Länge für rund 40 cm ± 10%, vorzugsweise ± 5 % und/oder in einem Bereich zwischen 10 % und 40 %, vorzugsweise zwischen 15 % und 25 %, von einer Gesamtbreite der Windschutzscheibe auf gleichbleibender Höhe geradlinig verläuft.

In einer Ausführungsform weist der Hauptsichtbereich auf der Beifahrerseite eine (z. B. Maximal-) Höhe in einem Bereich zwischen 90 cm und 130 cm, vorzugsweise zwischen 100 cm und 120 cm, auf.

Es ist auch möglich, dass der Hauptsichtbereich auf der Beifahrerseite eine (z. B. Maximal-) Höhe von rund 110 cm ± 10%, vorzugsweise ± 5 % und/oder in einem Bereich zwischen 70 % und 95 %, vorzugsweise zwischen 80 % und 90 %, einer Gesamthöhe der Windschutzscheibe aufweist.

In einer weiteren Ausführungsform weist der Hauptsichtbereich auf der Fahrerseite eine (z. B. Maximal-) Höhe in einem Bereich zwischen 60 cm und 100 cm, vorzugsweise zwischen 70 cm und 90 cm, auf.

Es ist auch möglich, dass der Hauptsichtbereich auf der Fahrerseite eine (z. B. Maximal-) Höhe von rund 80 cm ± 10%, vorzugsweise ± 5 %, und/oder in einem Bereich zwischen 40 % und 80 %, vorzugsweise 50 % und 70 %, einer Gesamthöhe der Windschutzscheibe aufweist.

In einer weiteren Ausführungsform weist der obere Bereich auf der Beifahrerseite eine (z. B. Minimal-) Höhe in einem Bereich zwischen 2 cm und 12 cm, vorzugsweise zwischen 5 cm und 9 cm, auf.

Es ist auch möglich, dass der obere Bereich auf der Beifahrerseite eine (z. B. Minimal-) Höhe von rund 7 cm ± 10%, vorzugsweise ± 5 %, und/oder in einem Bereich zwischen 2 % und 15 %, vorzugsweise zwischen 3 % und 10 %, einer Gesamthöhe der Windschutzscheibe aufweist.

In einer weiteren Ausführungsform weist der obere Bereich auf der Fahrerseite eine (z. B. Maximal- und/oder Minimal-) Höhe in einem Bereich zwischen 15 cm und 55 cm, vorzugsweise zwischen 25 cm und 45 cm (z. B. rund 35 cm ± 10%, vorzugsweise ± 5 %), auf.

Es ist auch möglich, dass der obere Bereich auf der Fahrerseite eine (z. B. Maximal- und/oder Minimal-) Höhe von rund 35 cm ± 10%, vorzugsweise ± 5 %, und/oder in einem Bereich zwischen 15 % und 40 %, vorzugsweise zwischen 20 % und 35 %, einer Gesamthöhe der Windschutzscheibe aufweist.

In einer Ausführungsvariante erstreckt sich die obere Begrenzungskurve und/oder die untere Begrenzungskurve auf der Fahrerseite geradlinig auf im Wesentlichen gleichbleibender Höhe.

In einer weiteren Ausführungsvariante erhöht sich eine Höhe der oberen Begrenzungskurve und/oder der unteren Begrenzungskurve in einem Übergangsbereich in einer Richtung zu der Beifahrerseite.

In einer Weiterbildung ist der Übergangsbereich zu einer Horizontalen angewinkelt, vorzugsweise in einem Winkel zwischen 20° und 60°, vorzugsweise zwischen 30° und 50° (z. B. rund 40° ± 10%, vorzugsweise ± 5 %). Es ist möglich, dass der Übergangsbereich eine Länge zwischen 20 cm und 50 cm, vorzugsweise zwischen 30 cm und 40 cm (z. B. rund 40 cm ± 10%, vorzugsweise ± 5 %), aufweist und/oder im Wesentlichen geradlinig ist.

In einer weiteren Ausführungsform grenzt der Übergangsbereich an einen geradlinigen, auf gleicher Höhe verlaufenden Bereich der oberen Begrenzungskurve und/oder der unteren Begrenzungskurve auf der Fahrerseite an. Alternativ oder zusätzlich grenzt der Übergangsbereich an einen geradlinigen, auf gleicher Höhe verlaufenden Bereich auf der Beifahrerseite der oberen Begrenzungskurve und/oder der unteren Begrenzungskurve an.

In einer weiteren Ausführungsform ist der Übergangsbereich im Wesentlichen auf der Beifahrerseite und/oder außermittig bezüglich einer Mittelvertikalebene der Windschutzscheibe angeordnet.

In einem Ausführungsbeispiel ist die Windschutzscheibe als eine Vertikalwindschutzscheibe zum Einbau in im Wesentlichen vertikaler Ausrichtung ausgebildet.

In einem weiteren Ausführungsbeispiel ist die Windschutzscheibe als eine Nutzfahrzeug-Fahrerhaus-Windschutzscheibe, vorzugsweise eine Lastkraftwagen-Fahrerhaus-Windschutzscheibe, ausgeführt.

In einem weiteren Ausführungsbeispiel weist die Windschutzscheibe eine Gesamthöhe in einem Bereich zwischen 105 cm und 145 cm, vorzugsweise zwischen 115 cm und 135 cm (z. B. rund 125 cm ± 10%, vorzugsweise ± 5 %), und/oder eine Gesamtbreite in einem Bereich zwischen 205 cm und 245 cm, vorzugsweise zwischen 215 cm und 235 cm (z. B. rund 225 cm ± 10%, vorzugsweise ± 5 %), auf.

In einem weiteren Ausführungsbeispiel ist die Windschutzscheibe gewölbt.

In einer Ausführungsform ist der obere Bereich sonnenstrahlreflektierend und/oder sonnenstrahlabsorbierend ausgebildet.

In einer weiteren Ausführungsform sind der obere Bereich und der Hauptsichtbereich integral einstückig miteinander ausgebildet.

In einer Ausführungsvariante ist der obere Bereich oberhalb des Hauptsichtbereichs vorzugsweise angrenzend an den Hauptsichtbereich angeordnet.

In einer weiteren Ausführungsvariante ist die obere Begrenzungskurve und/oder die untere Begrenzungskurve durchgehend oder zumindest abschnittsweise durchgehend.

In einer weiteren Ausführungsvariante fällt die obere Begrenzungskurve mit der unteren Begrenzungskurve zusammen.

In einem Ausführungsbeispiel sind die Fahrerseite und die Beifahrerseite der Windschutzscheibe integral-einstückig miteinander ausgebildet.

In einem weiteren Ausführungsbeispiel erstreckt sich der obere Bereich als durchgehendes Band oder als zumindest abschnittsweise durchgehendes Band von der Fahrerseite zu der Beifahrerseite (zum Beispiel zwischen entgegengesetzten Außenseitenabschnitten oder Außenkanten der Windschutzscheibe).

In einem weiteren Ausführungsbeispiel erstreckt sich der Hauptsichtbereich als durchgehendes Band oder als zumindest abschnittsweise durchgehendes Band von der Fahrerseite zu der Beifahrerseite (zum Beispiel zwischen entgegengesetzten Außenseitenabschnitten oder Außenkanten der Windschutzscheibe).

In einer Ausführungsform ist der obere Bereich durch (z. B. einseitige und/oder fahrerhausinnenseitige) Aufbringung einer Beschichtung in der Lichttransmission verringert (vorzugsweise gegenüber dem Hauptsichtbereich), vorzugsweise im Wesentlichen intransparent oder getönt, vorzugsweise mittels Bedrucken (z. B. Siebdruck) oder mittels Folieren.

Die Erfindung betrifft auch ein Kraftfahrzeug, vorzugsweise ein Nutzfahrzeug, vorzugsweise einen Lastkraftwagen oder einen Omnibus, aufweisend eine Windschutzscheibe wie hierin offenbart.

Es ist möglich, dass der Lastkraftwagen zum Einsteigen und Aussteigen aus dem Lastkraftwagen mittels der Beifahrertür in aufrechter Haltung ausgebildet ist, zum Beispiel mit hoher Beifahrertür (z. B. höher als 170 cm oder 175 cm oder 180 cm) und/oder mit niedrigem Bodenabstand des Fahrerhauses (z. B. 40 cm oder 35 cm oder weniger).

Erfindungsgemäß weist das Kraftfahrzeug ferner mindestens eine Bedien- und/oder Einbaukomponente (d. h. eine Sonnenblende, ein Sonnenrollo, eine oder mehrere Ablagemöglichkeiten, einen Fahrtenschreiber, ein Mautsystem, ein Flottenmanagementsystem und/oder ein Funksystem) zur Benutzung für einen Fahrer des Nutzfahrzeugs auf. Die mindestens eine Bedien- und/oder Einbaukomponente ist fahrerhausinnenseitig hinter (bzgl. einer Sicht auf das Nutzfahrzeug von vorne) dem oberen Bereich auf gleicher Höhe mit dem oberen Bereich vorzugsweise auf der Fahrerseite der Windschutzscheibe angeordnet, vorzugsweise angrenzend an die untere Begrenzungskurve und/oder die obere Begrenzungskurve. Die Bedien- und/oder Einbaukomponente kann sowohl wärmedämmend wirken, als auch leicht vom sitzenden Fahrer des Nutzfahrzeugs erreicht werden.

Erfindungsgemäß weist das Kraftfahrzeug ferner eine Wärmeisolation und/oder eine Wärmedämmung auf, die zwischen der mindestens einen Bedien- und/oder Einbaukomponente und dem oberen Bereich angeordnet ist, vorzugsweise auf der Fahrerseite.

In einer Ausführungsform verläuft die obere Begrenzungskurve und/oder die untere Begrenzungskurve auf der Beifahrerseite auf einer Höhe höher als 170 cm, 175 cm, 180 cm und/oder 185 cm, gemessen von einem Innenboden einer Fahrerkabine des Nutzfahrzeugs in einer Vertikalrichtung zu der oberen Begrenzungskurve und/oder der unteren Begrenzungskurve.

In einer weiteren Ausführungsform verläuft die obere Begrenzungskurve und/oder die untere Begrenzungskurve auf der Fahrerseite auf einer Höhe niedriger als 140 cm, 135 cm, 130 cm, 125 und/oder 120 cm, gemessen von einem Innenboden einer Fahrerkabine des Nutzfahrzeugs in einer Vertikalrichtung zu der oberen Begrenzungskurve und/oder der unteren Begrenzungskurve.

In einer weiteren Ausführungsform weist das Kraftfahrzeug ferner eine Scheibenwischervorrichtung (zum Beispiel gegenläufige Scheibenwischervorrichtung) auf, die zum im Wesentlichen vollständigen Überstreichen des Hauptsichtbereichs und zum nur teilweisen Überstreichen des oberen Bereichs angeordnet und ausgebildet ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Vorderansicht einer beispielhaften Windschutzscheibe gemäß der vorliegenden Offenbarung;
- Figur 2: eine Vorderansicht einer beispielhaften Windschutzscheibe, die in eine Fahrerkabine eines Nutzfahrzeugs eingebaut ist, gemäß der vorliegenden Offenbarung; und
- Figur 3: eine perspektivische Innenansicht einer Fahrerkabine eines Nutzfahrzeugs mit einer beispielhaften Windschutzscheibe gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

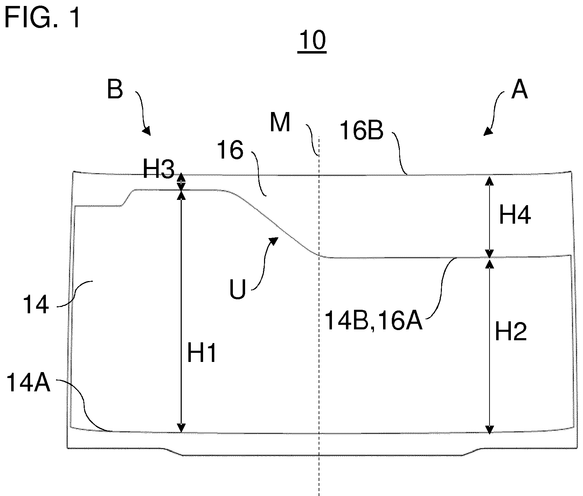

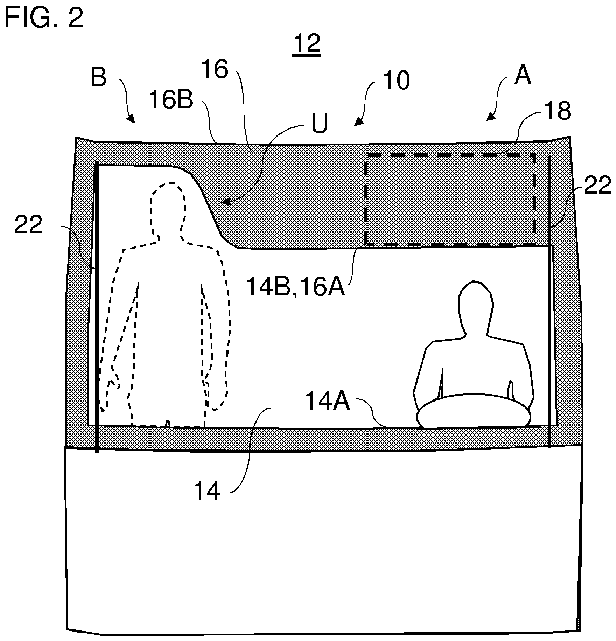

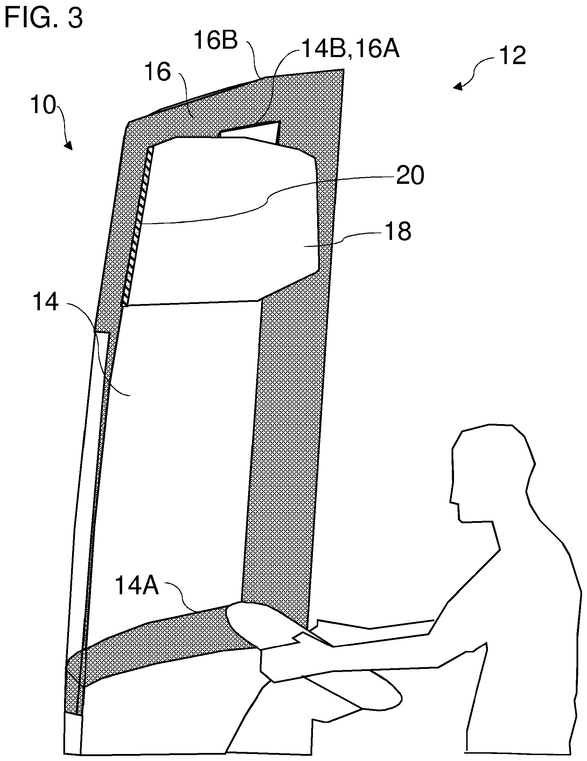

Die Figuren 1 bis 3 zeigen eine fahrzeugfrontseitige Windschutzscheibe 10 für ein Kraftfahrzeug. In Figur 1 ist die Windschutzscheibe 10 einzeln dargestellt. In den Figuren 2 und 3 ist die Windschutzscheibe 10 im eingebauten Zustand dargestellt. Im eingebauten Zustand ist die Windschutzscheibe 10 in einer im Wesentlichen vertikalen Ausrichtung montiert. Die Windschutzscheibe 10 ist insbesondere als Windschutzscheibe für ein Nutzfahrzeug ausgeführt. Das Nutzfahrzeug kann beispielsweise ein Lastkraftwagen oder ein Omnibus sein.

Vorzugsweise ist die Windschutzscheibe 10 in einer Lastkraftwagenkabine bzw. Fahrerkabine 12 eines Lastkraftwagens eingebaut. Der Lastkraftwagen kann sich beispielsweise dadurch auszeichnen, dass dieser einerseits eine vergleichsweise hohe Beifahrertür und andererseits eine bodennahe Positionierung der Fahrerkabine aufweist (z. B. mit einem Bodenabstand kleiner als ungefähr 40 cm). Damit wird ermöglicht, dass ein Fahrer oder Beifahrer des Lastkraftwagens den Lastkraftwagen aufrecht oder nahezu aufrecht und auf einfache Weise durch die hohe Beifahrertür verlassen kann. Für Fahrzeuganwendungen mit einer hohen Ein- und Ausstiegshäufigkeit, zum Beispiel innerstädtischer Verteiler-Lastkraftwagen, kann dies den Komfort erheblich vergrößern. Aus Gründen der Sicherheit beim Verlassen der Fahrerkabine 12 kann die Windschutzscheibe 10 vergleichsweise hoch ausgeführt sein. Damit kann auch in aufrechter oder annähernd aufrechter Haltung auf der Beifahrerseite der Fahrerkabine 12 vor dem Verlassen ein Blick nach vorne durch die Windschutzscheibe 10 ermöglicht werden, zum Beispiel zum Erblicken von Fahrradfahrern oder Fußgängern.

Die Windschutzscheibe 10 kann beispielsweise aus einem Verbundglas hergestellt sein. Die Windschutzscheibe 10 kann gewölbt sein. Die Windschutzscheibe 10 weist eine Fahrerseite A und eine Beifahrerseite B auf. Die Windschutzscheibe 10 kann vorzugsweise nicht geteilt sein. Stattdessen können die Fahrerseite A und die Beifahrerseite B Integral-einstückig miteinander ausgebildet sein. Eine Mittelvertikalebene M der Windschutzscheibe 10 kann die Windschutzscheibe 10 in die Fahrerseite A und die Beifahrerseite B aufteilen.

Die Windschutzscheibe 10 weist einen transparenten bzw. durchsichtigen Hauptsichtbereich 14 auf. Der Hauptsichtbereich 14 ist nach unten durch eine untere Begrenzungskurve 14A und nach oben durch eine obere Begrenzungskurve 14B begrenzt. Der Hauptsichtbereich 14 erstreckt sich als durchgehendes Band zwischen der unteren Begrenzungskurve 14A und der oberen Begrenzungskurve 14B von der Fahrerseite A der Windschutzscheibe 10 zu der Beifahrerseite B der Windschutzscheibe 10. Der Hauptsichtbereich 14 ermöglicht dem Fahrer des Kraftfahrzeugs die Sicht auf den Bereich vor dem Kraftfahrzeug. Der Hauptsichtbereich 14 kann ferner von seitlichen Begrenzungskurve außen an der Fahrerseite A und an der Beifahrerseite B begrenzt sein.

Die Windschutzscheibe 10 weist einen in einer Lichttransmission gegenüber dem Hauptsichtbereich 14 verringerten, vorzugsweise intransparenten bzw. undurchsichtigen oder getönten, oberen Bereichen 16 auf. Der obere Bereich 16 kann vorzugsweise sonnenstrahlreflektierend und/oder sonnenstrahlabsorbierend ausgebildet sein. Der obere Bereich 16 kann beispielsweise durch Aufbringen einer Beschichtung intransparent oder getönt sein. Zum Beispiel kann eine Innenseitenfläche der Windschutzscheibe 10 im oberen Bereich 16 mit einer dunklen, zum Beispiel schwarzen, Farbe durchgehend oder gemustert bedruckt sein, zum Beispiel mittels Siebdruck. Es ist auch möglich, dass der obere Bereich 16 auf andere Weise intransparent oder getönt ist, zum Beispiel durch Folieren auf der Innenseitenfläche.

Der obere Bereich 16 ist nach unten durch eine untere Begrenzungskurve 16A begrenzt. Der obere Bereich 16 kann nach oben beispielsweise durch eine Oberkante 16B der Windschutzscheibe 10 begrenzt sein. Alternativ kann der obere Bereich nach oben beispielsweise auch durch eine obere Begrenzungskurve begrenzt sein. Der obere Bereich 16 erstreckt sich bandförmig entlang der unteren Begrenzungskurve 16A und der Oberkante 16B von der Fahrerseite A zu der Beifahrerseite B. Der obere Bereich 16 grenzt an den Hauptsichtbereich 14 an, vorzugsweise entlang einer gesamten Länge des oberen Bereichs 16 und des Hauptsichtbereichs 14. Die obere Begrenzungskurve 14B des Hauptsichtbereichs 14 fällt mit der unteren Begrenzungskurve 16A des oberen Bereichs 16 zusammen.

Im Gegensatz zu herkömmlichen Windschutzscheiben verlaufen die obere Begrenzungskurve 14B und die untere Begrenzungskurve 16A nicht - wie herkömmlich - durchgehend gradlinig auf gleicher Höhe. Stattdessen wird hierin vorgeschlagen, dass die obere Begrenzungskurve 14B und/oder die untere Begrenzungskurve 16A auf der Fahrerseite A und der Beifahrerseite B unterschiedlich hoch verlaufen.

In dem bevorzugten Ausführungsbeispiel gemäß der vorliegenden Offenbarung (d. h. hohe Frontscheibe für einen Lastkraftwagen, der aufrecht oder nahezu aufrecht durch eine hohe Beifahrertür verlassen werden kann) wird vorzugsweise vorgeschlagen, dass die obere Begrenzungskurve 14B auf der Beifahrerseite B höher verläuft als auf der Fahrerseite A. Gleichermaßen verläuft in die untere Begrenzungskurve 16A auf der Beifahrerseite B höher als auf der Fahrerseite A. Die Begrenzungskurven 14B, 16A verlaufen asymmetrisch, d. h. insbesondere nicht spiegelsymmetrisch bezüglich der Mittelvertikalebene M der Windschutzscheibe 10.

Der Verlauf der Begrenzungskurven 14B, 16A beruht unter anderem auf folgenden Überlegungen. Ein im Fahrzeug sitzender Fahrer hat einen Augenpunkt der sich deutlich weiter unten als der einer aufrecht aussteigenden Person befindet (siehe Figur 2). Die erforderliche Höhe des Hauptsichtbereichs 14 richtet sich für den Fahrer nach der direkten Sicht nach draußen. Hinsichtlich der Sicht nach oben ist dies in erster Linie die Ampelsicht. Eine durchgehend waagrechte obere Begrenzungskurve des Hauptsichtbereichs, die auf eine aufrecht aussteigende Person ausgelegt ist, wäre für den sitzenden Fahrzeugführer deutlich zu weit oben angeordnet. Durch eine gegenüber dem Fahrer relativ hoch angeordnete obere Begrenzungskurve des Hauptsichtbereichs würden Einbauten hinter der Windschutzscheibe mit dort positionierten Bedienelementen, die durch den Fahrer vom Fahrersitz aus erreichbar und bedienbar sein müssen, erschwert oder verhindert. Bei hellem Außenlicht ist für den Fahrer bei einer hohen Windschutzscheibe eine Blende vorzusehen, mit der der Lichteinfall individuell abgeschattet werden kann. Bei schönem Wetter mit hoher Sonnenintensität erfolgt durch die große Windschutzscheibe ein hoher Energieeintrag in die Fahrerkabine, der durch eine entsprechend hohe Leistung der Klimaanlage kompensiert werden muss. Direkt den Fahrer beaufschlagende Strahlungsenergie kann durch die abgekühlte Luft einer Klimatisierungsanlage nur unzureichend kompensiert werden. Eine Abschattung hinter der Frontscheibe innerhalb der Kabine kann den Energieeintrag durch die Windschutzscheibe in das Fahrerhaus nur begrenzt verhindern. Bei tiefen Außentemperaturen erfolgt aufgrund des hohen Wärmedurchgangskoeffizienten von Glas ein großer Wärmeverlust durch eine große Glasfläche. Aufgrund der isolierenden Eigenschaften hinter der Glasfläche eingebauter Innenverkleidungsbauteile und der Möglichkeit des Aufbringens von Isolationsmaterial kann die erforderliche Heizleistung der Klimaanlage reduziert werden.

Die Windschutzscheibe 10 gemäß der vorliegenden Offenbarung verbindet die Vorteile einer hoch angeordneten oberen Begrenzungskurve des transparenten Hauptsichtbereichs der Windschutzscheibe mit den Vorteilen einer niedrig angeordneten Begrenzungskurve des intransparenten oder getönten, oberen Bereichs der Windschutzscheibe.

Auf der Beifahrerseite B wird durch die relativ hoch angeordneten Begrenzungskurven 14B, 16A der Blick durch den Hauptsichtbereich auch in aufrechter oder nahezu aufrechter Haltung ermöglicht. Dies ist aus Sicherheitsgründen insbesondere beim Verlassen der Fahrerkabine 12 durch die Beifahrertür vorteilhaft.

Vorzugsweise können die Begrenzungskurven 14B, 16A auf der Beifahrerseite B beispielsweise in Höhe einer Oberkante einer Beifahrertüre, die eine Höhe aufweist (z. B. größer als 170 cm oder 175 cm oder 180 cm), mit der aus der Fahrerkabine 12 aufrecht oder nahezu aufrecht ausgestiegen werden kann, angeordnet sein.

Auf der Fahrerseite A wird durch die relativ niedrig angeordneten Begrenzungskurven 14B, 16A ein Energieeintrag durch Sonnenstrahlung verringert. Zusätzlich wird die Anordnung von Bedien- und/oder Einbaukomponenten 18 (siehe Figuren 2 und 3) zur Benutzung für den Fahrer im oberen Bereich 16 auf der Fahrerseite A ermöglicht. Die Bedien- und Einbaukomponenten 18 können aufgrund der relativ niedrigen Anordnung bequem vom Fahrer erreicht werden und zusätzlich auch noch eine wärmeisolierende oder wärmedämmende Wirkung haben.

Die Bedien- und/oder Einbaukomponenten 18 können beispielsweise ein Abschattungselement, wie zum Beispiel eine Sonnenblende oder ein Sonnenrollo, aufweisen. Es ist auch möglich, dass die Bedien- und/oder Einbauelemente beispielsweise eine oder mehrere Ablagemöglichkeiten, einen Fahrtenschreiber, ein Mautsystem, ein Flottenmanagementsystem und/oder ein Funksystem usw. aufweisen.

Die Bedien- und/oder Einbaukomponenten 18 sind fahrerhausinnenseitig hinter dem oberen Bereich 16, zum Beispiel angrenzend an die untere Begrenzungskurve 16A, angeordnet (siehe Figur 3). Es ist möglich, dass zwischen den Bedien- und/oder Einbaukomponenten 18 und dem oberen Bereich 16 eine zusätzliche Wärmeisolierung oder Wärmedämmung 20, zum Beispiel in Form von Isolationsmaterial, angeordnet ist. Damit kann die erforderliche Heiz- und Kühlleistung der Klimaanlage reduziert werden. Bei beispielsweise elektrisch angetriebenen Fahrzeugen kann somit die Reichweite des Fahrzeugs bei konstanter Batteriekapazität erhöht werden.

Darüber hinaus können durch die hohen oberen Begrenzungskurven 14B,16A auf der Beifahrerseite B die Sicht vom Fahrersitz auf eine Ampel oder auf einen in diesem Bereich angeordneten Außenspiegel des Kraftfahrzeugs ermöglicht werden.

In dem dargestellten Ausführungsbeispiel kann die Windschutzscheibe 10 eines oder mehrere der nachfolgenden Maße aufweisen. Die Windschutzscheibe 10 kann eine Gesamthöhe in einem Bereich zwischen 105 cm und 145 cm, vorzugsweise zwischen 115 cm und 135 cm, und eine Gesamtreite in einem Bereich zwischen 205 cm und 245 cm, vorzugsweise zwischen 215 cm und 235 cm, aufweisen. Die Begrenzungskurven 14B, 16A können auf der Beifahrerseite auf einer Höhe höher als 170 cm, 175 cm, 180 cm und/oder 185 cm verlaufen, gemessen von einem Innenboden der Fahrerkabine 12 in einer Vertikalrichtung nach oben. Die Begrenzungskurven 14B, 16A können auf der Fahrerseite auf einer Höhe niedriger als 140 cm, 135 cm, 130 cm, 125 und/oder 120 cm verlaufen, erneut gemessen vom Innenboden der Fahrerkabine 12. Die Begrenzungskurven 14B, 16A auf der Beifahrerseite B können um mindestens 20 cm, vorzugsweise um mindestens 25 cm, höher verlaufen als auf der Fahrerseite A. Der Hauptsichtbereich 14 kann auf der Beifahrerseite B eine Höhe H1 in einem Bereich zwischen 90 cm und 130 cm, vorzugsweise zwischen 100 cm und 120 cm, aufweisen. Der Hauptsichtbereich 14 kann auf der Fahrerseite A eine Höhe H2 in einem Bereich zwischen 60 cm und 100 cm, vorzugsweise zwischen 70 cm und 90 cm, aufweisen. Der obere Bereich 16 kann auf der Beifahrerseite B eine Höhe H3 in einem Bereich zwischen 2 cm und 12 cm, vorzugsweise zwischen 5 cm und 9 cm, aufweisen. Der obere Bereich 16 kann auf der Fahrerseite A eine Höhe H4 in einem Bereich zwischen 15 cm und 55 cm, vorzugsweise zwischen 25 cm und 45 cm, aufweisen. Die Begrenzungskurven 14B, 16A können auf der Fahrerseite A über eine Länge in einem Bereich zwischen 90 cm und 140 cm, vorzugsweise zwischen 100 cm und 120 cm, auf gleichbleibender Höhe gradlinig verlaufen. Die Begrenzungskurven 14B, 16A können auf der Beifahrerseite B über eine Länge in einem Bereich zwischen 20 cm und 60 cm, vorzugsweise zwischen 30 cm und 50 cm, auf gleichbleibender Höhe gradlinig verlaufen.

Beispielsweise können die Begrenzungskurven 14B, 16A einen Übergangsbereich U aufweisen. Im Übergangsbereich U kann sich eine Höhe der Begrenzungskurven 14B, 16A stetig oder unstetig verändern. Im dargestellten Ausführungsbeispiel ist der Übergangsbereich U bezüglich einer Horizontalen angewinkelt, z. B. in einem Winkel zwischen 20° und 60°, vorzugsweise zwischen 30° und 50°. Der Übergangsbereich kann beispielsweise eine Länge zwischen 20 cm und 50 cm, vorzugsweise zwischen 30 cm und 40 cm, aufweisen. Der Übergangsbereich U kann im Wesentlichen geradlinig sein. Der Übergangsbereich U kann an einen geradlinigen, auf gleicher Höhe verlaufenden Bereich der Begrenzungskurven 14B, 16A auf der Fahrerseite A angrenzen. Der Übergangsbereich U kann an einen geradlinigen, auf gleicher Höhe verlaufenden Bereich der Begrenzungskurven 14B, 16A auf der Beifahrerseite B angrenzen. Im Übergangsbereich U kann sich eine Höhe der Begrenzungskurven 14B, 16A in Richtung zu der Beifahrerseite B vergrößern. Der Übergangsbereich U kann im Wesentlichen auf der Beifahrerseite B angeordnet sein, d. h. z. B. außermittig bezüglich der Mittelvertikalebene M der Windschutzscheibe 10.

Zusätzlich können die Wischfelder der Windschutzscheibe 10 optimiert werden. Eine Scheibenwischervorrichtung 22 kann beispielsweise als eine gegenläufige Scheibenwischervorrichtung ausgebildet sein. Die Scheibenwischer oder Wischerblätter der Scheibenwischervorrichtung 22 können jeweils außen an der Fahrer- und Beifahrerseite A und B angeordnet und nach innen und unten schwenkend ausgebildet sein. Die Scheibenwischer der Scheibenwischervorrichtung 22 können so die gesamte Höhe der Windschutzscheibe 10 überwischen und dabei insbesondere einen großen Teil des Hauptsichtbereichs 14 überstreichen. Nur ein Teil des nicht durch die Scheibenwischervorrichtung 22 gewischten Bereiches der Windschutzscheibe 10 kann sich im intransparenten oder getönten, oberen Bereich 16 befinden.

### Bezugszeichenliste

- A: Fahrerseite
- B: Beifahrerseite
- M: Mittelvertikalebene
- U: Übergangsbereich
- H1-H4: Höhen

- 10: Windschutzscheibe
- 12: Fahrerkabine
- 14: Hauptsichtbereich
- 14A: Untere Begrenzungskurve
- 14B: Obere Begrenzungskurve
- 16: Oberer Bereich
- 16A: Untere Begrenzungskurve
- 16B: Oberkante
- 18: Bedien- und/oder Einbaukomponente(n)
- 20: Wärmeisolierung oder Wärmedämmung
- 22: Scheibenwischervorrichtung

## Patentansprüche

1. Kraftfahrzeug, vorzugsweise Nutzfahrzeug, vorzugsweise Lastkraftwagen oder Omnibus, aufweisend eine Windschutzscheibe (10), wobei die Windschutzscheibe (10) aufweist:
einen, vorzugsweise im Wesentlichen intransparenten oder getönten, oberen Bereich (16), der eine geringere Lichttransmission als ein Hauptsichtbereich (14) der Windschutzscheibe (10) aufweist und in einer Vertikalrichtung nach unten durch eine untere Begrenzungskurve (16A) begrenzt ist, wobei die untere Begrenzungskurve (16A) auf einer Beifahrerseite (B) der Windschutzscheibe (10) und einer Fahrerseite (A) der Windschutzscheibe (10) unterschiedlich hoch verläuft, und vorzugsweise der Hauptsichtbereich (14) transparent ist und in einer Vertikalrichtung nach oben durch eine obere Begrenzungskurve (14B) begrenzt ist, wobei die obere Begrenzungskurve (14B) auf einer Beifahrerseite (B) der Windschutzscheibe (10) und einer Fahrerseite (A) der Windschutzscheibe (10) unterschiedlich hoch verläuft;
wobei das Kraftfahrzeug ferner aufweist:
mindestens eine Bedien- und/oder Einbaukomponente (18) zur Benutzung für einen Fahrer des Kraftfahrzeugs, wobei die mindestens eine Bedien- und/oder Einbaukomponente (18) fahrerhausinnenseitig hinter dem oberen Bereich (16) auf gleicher Höhe mit dem oberen Bereich (16) auf der Fahrerseite (A) der Windschutzscheibe (10) angeordnet ist,
**dadurch gekennzeichnet, dass**
eine Wärmeisolation und/oder eine Wärmedämmung (20) zwischen der mindestens einen Bedien- und/oder Einbaukomponente (18) und dem oberen Bereich (16) angeordnet ist, und/oder
die Bedien- und/oder Einbaukomponente (18) eine Sonnenblende, ein Sonnenrollo, eine oder mehrere Ablagemöglichkeiten, einen Fahrtenschreiber, ein Mautsystem, ein Flottenmanagementsystem und/oder ein Funksystem aufweist.

2. Kraftfahrzeug nach Anspruch 1, wobei:
die obere Begrenzungskurve (14B) auf der Beifahrerseite (B) höher verläuft als auf der Fahrerseite (A); und/oder
die untere Begrenzungskurve (16A) auf der Beifahrerseite (B) höher verläuft als auf der Fahrerseite (A); und/oder
die obere Begrenzungskurve (14B) und/oder die untere Begrenzungskurve (16A) asymmetrisch verläuft.

3. Kraftfahrzeug nach Anspruch 1 oder Anspruch 2, wobei
die obere Begrenzungskurve (14B) und/oder die untere Begrenzungskurve (16A) auf der Beifahrerseite (B) um mindestens 20 cm, vorzugsweise um mindestens 25 cm, höher verläuft als auf der Fahrerseite (A); und/oder
die obere Begrenzungskurve (14B) und/oder die untere Begrenzungskurve (16A) auf der Beifahrerseite (B) zwischen 15 % und 35 %, vorzugsweise zwischen 20 % und 30 %, einer Gesamthöhe der Windschutzscheibe (10) höher verläuft als auf der Fahrerseite (A); und/oder
die obere Begrenzungskurve (14B) und/oder die untere Begrenzungskurve (16A) auf der Fahrerseite (A) über eine Länge in einem Bereich zwischen 90 cm und 140 cm, vorzugsweise zwischen 100 cm und 120 cm, auf gleichbleibender Höhe geradlinig verläuft; und/oder
die obere Begrenzungskurve (14B) und/oder die untere Begrenzungskurve (16A) auf der Fahrerseite (A) über eine Länge in einem Bereich zwischen 40 % und 50 %, vorzugsweise zwischen 45 % und 50 %, von einer Gesamtbreite der Windschutzscheibe (10) auf gleichbleibender Höhe geradlinig verläuft; und/oder
die obere Begrenzungskurve (14B) und/oder die untere Begrenzungskurve (16A) auf der Beifahrerseite (B) über eine Länge in einem Bereich zwischen 20 cm und 60 cm, vorzugsweise zwischen 30 cm und 50 cm, auf gleichbleibender Höhe geradlinig verläuft; und/oder
die obere Begrenzungskurve (14B) und/oder die untere Begrenzungskurve (16A) auf der Beifahrerseite (B) über eine Länge in einem Bereich zwischen 10 % und 40 %, vorzugsweise zwischen 15 % und 25 %, von einer Gesamtbreite der Windschutzscheibe (10) auf gleichbleibender Höhe geradlinig verläuft.

4. Kraftfahrzeug nach einem der vorherigen Ansprüche, wobei:
der Hauptsichtbereich (14) auf der Beifahrerseite (B) eine Höhe (H1) in einem Bereich zwischen 90 cm und 130 cm, vorzugsweise zwischen 100 cm und 120 cm, aufweist; und/oder
der Hauptsichtbereich (14) auf der Beifahrerseite (B) eine Höhe (H1) in einem Bereich zwischen 70 % und 95 %, vorzugsweise zwischen 80 % und 90 %, einer Gesamthöhe der Windschutzscheibe (10) aufweist; und/oder
der Hauptsichtbereich (14) auf der Fahrerseite (A) eine Höhe (H2) in einem Bereich zwischen 60 cm und 100 cm, vorzugsweise zwischen 70 cm und 90 cm, aufweist; und/oder
der Hauptsichtbereich (14) auf der Fahrerseite (A) eine Höhe (H2) in einem Bereich zwischen 40 % und 80 %, vorzugsweise 50 % und 70 %, einer Gesamthöhe der Windschutzscheibe (10) aufweist; und/oder
der obere Bereich (16) auf der Beifahrerseite (B) eine Höhe (H3) in einem Bereich zwischen 2 cm und 12 cm, vorzugsweise zwischen 5 cm und 9 cm, aufweist; und/oder
der obere Bereich (16) auf der Beifahrerseite(B) eine Höhe (H3) in einem Bereich zwischen 2 % und 15 %, vorzugsweise zwischen 3 % und 10 %, einer Gesamthöhe der Windschutzscheibe (10) aufweist; und/oder
der obere Bereich (16) auf der Fahrerseite (A) eine Höhe (H4) in einem Bereich Höhe in einem Bereich zwischen 15 cm und 55 cm, vorzugsweise zwischen 25 cm und 45 cm aufweist; und/oder
der obere Bereich (16) auf der Fahrerseite (A) eine Höhe (H4) in einem Bereich zwischen 15 % und 40 %, vorzugsweise zwischen 20 % und 35 %, einer Gesamthöhe der Windschutzscheibe (10) aufweist.

5. Kraftfahrzeug nach einem der vorherigen Ansprüche, wobei:
die obere Begrenzungskurve (14B) und/oder die untere Begrenzungskurve (16A) sich auf der Fahrerseite (A) geradlinig auf im Wesentlichen gleichbleibender Höhe erstreckt.

6. Kraftfahrzeug nach einem der vorherigen Ansprüche, wobei:
sich eine Höhe der oberen Begrenzungskurve (14B) und/oder der unteren Begrenzungskurve (16A) in einem Übergangsbereich (U) in einer Richtung zu der Beifahrerseite (B) erhöht.

7. Kraftfahrzeug nach Anspruch 6, wobei:
der Übergangsbereich (U) zu einer Horizontalen angewinkelt ist, vorzugsweise in einem Winkel zwischen 20° und 60°, vorzugsweise zwischen 30° und 50°; und/oder
der Übergangsbereich (U) eine Länge zwischen 20 cm und 50 cm, vorzugsweise zwischen 30 cm und 40 cm, aufweist; und/oder
der Übergangsbereich (U) im Wesentlichen geradlinig ist; und/oder
der Übergangsbereich (U) an einen geradlinigen, auf gleicher Höhe verlaufenden Bereich der oberen Begrenzungskurve (14B) und/oder der unteren Begrenzungskurve (16A) auf der Fahrerseite (A) angrenzt; und/oder
der Übergangsbereich (U) an einen geradlinigen, auf gleicher Höhe verlaufenden Bereich auf der Beifahrerseite (B) der oberen Begrenzungskurve (14B) und/oder der unteren Begrenzungskurve (16A) angrenzt und/oder
der Übergangsbereich (U) im Wesentlichen auf der Beifahrerseite (B) angeordnet und/oder außermittig bezüglich einer Mittelvertikalebene (M) der Windschutzscheibe (10) angeordnet ist.

8. Kraftfahrzeug nach einem der vorherigen Ansprüche, wobei:
die Windschutzscheibe (10) als eine Vertikalwindschutzscheibe zum Einbau in im Wesentlichen vertikaler Ausrichtung ausgebildet ist; und/oder
die Windschutzscheibe (10) als eine Nutzfahrzeug-Fahrerhaus-Windschutzscheibe, vorzugsweise eine Lastkraftwagen-Fahrerhaus-Windschutzscheibe, ausgeführt ist; und/oder
die Windschutzscheibe (10) eine Gesamthöhe in einem Bereich zwischen 105 cm und 145 cm, vorzugsweise zwischen 115 cm und 135 cm, und/oder eine Gesamtbreite in einem Bereich zwischen 205 cm und 245 cm, vorzugsweise zwischen 215 cm und 235 cm, aufweist; und/oder
die Windschutzscheibe (10) gewölbt ist; und/oder
der obere Bereich (16) sonnenstrahlreflektierend und/oder sonnenstrahlabsorbierend ausgebildet ist; und/oder
der obere Bereich (16) und der Hauptsichtbereich (14) integral einstückig miteinander ausgebildet sind.

9. Kraftfahrzeug nach einem der vorherigen Ansprüche, wobei:
der obere Bereich (16) oberhalb des Hauptsichtbereichs (14) angrenzend an den Hauptsichtbereich (14) angeordnet ist; und/oder
die obere Begrenzungskurve (14B) und/oder die untere Begrenzungskurve (16A) durchgehend oder zumindest abschnittsweise durchgehend ist; und/oder
die obere Begrenzungskurve (14B) mit der unteren Begrenzungskurve (16A) zusammenfällt; und/oder
die Fahrerseite (A) und die Beifahrerseite (B) der Windschutzscheibe (10) integral-einstückig miteinander ausgebildet sind.

10. Kraftfahrzeug) nach einem der vorherigen Ansprüche, wobei:
sich der obere Bereich (16) als durchgehendes Band oder als zumindest abschnittsweise durchgehendes Band von der Fahrerseite (A) zu der Beifahrerseite (B) erstreckt; und/oder
sich der Hauptsichtbereich (14) als durchgehendes Band oder als zumindest abschnittsweise durchgehendes Band von der Fahrerseite (A) zu der Beifahrerseite (B) erstreckt.

11. Kraftfahrzeug nach einem der vorherigen Ansprüche, wobei:
der obere Bereich (16) durch Aufbringung einer Beschichtung in der Lichttransmission verringert ist, vorzugsweise im Wesentlichen intransparent oder getönt ist, vorzugsweise mittels Bedrucken oder mittels Folieren.

12. Kraftfahrzeug nach einem der vorherigen Ansprüche, wobei:
die mindestens eine Bedien- und/oder Einbaukomponente (18) angrenzend an die untere Begrenzungskurve (16A) und/oder die obere Begrenzungskurve (14B) angeordnet ist.

13. Kraftfahrzeug nach einem der vorherigen Ansprüche, wobei:
die obere Begrenzungskurve (14B) und/oder die untere Begrenzungskurve (16A) auf der Beifahrerseite (B) auf einer Höhe höher als 170 cm, 175 cm, 180 cm und/oder 185 cm verläuft, gemessen von einem Innenboden einer Fahrerkabine (12) des Nutzfahrzeugs in einer Vertikalrichtung zu der oberen Begrenzungskurve (14B) und/oder der unteren Begrenzungskurve (16A); und/oder
die obere Begrenzungskurve (14B) und/oder die untere Begrenzungskurve (16A) auf der Fahrerseite (A) auf einer Höhe niedriger als 140 cm, 135 cm, 130 cm, 125 und/oder 120 cm verläuft, gemessen von einem Innenboden einer Fahrerkabine (12) des Nutzfahrzeugs in einer Vertikalrichtung zu der oberen Begrenzungskurve (14B) und/oder der unteren Begrenzungskurve (16A).

14. Kraftfahrzeug nach einem der vorherigen Ansprüche, ferner aufweisend:
eine Scheibenwischervorrichtung (22), die zum im Wesentlichen vollständigen Überstreichen des Hauptsichtbereichs (14) und zum nur teilweisen Überstreichen des oberen Bereichs (16) angeordnet und ausgebildet ist.

## Claims

1. A motor vehicle, preferably commercial vehicle, preferably lorry or bus, having a windscreen (10), wherein the windscreen (10) has:
a, preferably substantially opaque or tinted, upper region (16) which has lower light transmission than a main viewing region (14) of the windscreen (10) and is bounded downwards in a vertical direction by a lower boundary curve (16A), wherein the lower boundary curve (16A) runs at different heights on a front passenger's side (B) of the windscreen (10) and on a driver's side (A) of the windscreen (10), and preferably the main viewing region (14) is transparent and is bounded upwards in a vertical direction by an upper boundary curve (14B), wherein the upper boundary curve (14B) runs at different heights on a front passenger's side (B) of the windscreen (10) and on a driver's side (A) of the windscreen (10);
wherein the motor vehicle furthermore has:
at least one operating and/or installation component (18) for use for a driver of the motor vehicle, wherein the at least one operating and/or installation component (18) is arranged on the inside of the driver's cab behind the upper region (16) at the same height as the upper region (16) on the driver's side (A) of the windscreen (10), **characterized in that**
thermal insulation and/or thermal protection (20) is arranged between the at least one operating and/or installation component (18) and the upper region (16), and/or
the operating and/or installation component (18) has a sun visor, a roller blind, one or more storage options, a tachograph, a toll system, a fleet management system and/or a radio system.

2. The motor vehicle according to Claim 1, wherein:
the upper boundary curve (14B) runs at a higher level on the front passenger's side (B) than on the driver's side (A); and/or
the lower boundary curve (16A) runs at a higher level on the front passenger's side (B) than on the driver's side (A); and/or
the upper boundary curve (14B) and/or the lower boundary curve (16A) run/runs asymmetrically.

3. The motor vehicle according to Claim 1 or Claim 2, wherein
the upper boundary curve (14B) and/or the lower boundary curve (16A) run/runs at a higher level by at least 20 cm, preferably by at least 25 cm, on the front passenger's side (B) than on the driver's side (A); and/or
the upper boundary curve (14B) and/or the lower boundary curve (16A) run/runs at a higher level of between 15% and 35%, preferably between 20% and 30%, of an overall height of the windscreen (10) on the front passenger's side (B) than on the driver's side (A); and/or
the upper boundary curve (14B) and/or the lower boundary curve (16A) run/runs rectilinearly at a consistent height on the driver's side (A) over a length in a range between 90 cm and 140 cm, preferably between 100 cm and 120 cm; and/or
the upper boundary curve (14B) and/or the lower boundary curve (16A) run/runs rectilinearly at a consistent height on the driver's side (A) over a length in a range between 40% and 50%, preferably between 45% and 50%, of an overall width of the windscreen (10); and/or
the upper boundary curve (14B) and/or the lower boundary curve (16A) run/runs rectilinearly at a consistent height on the front passenger's side (B) over a length in a range between 20 cm and 60 cm, preferably between 30 cm and 50 cm; and/or
the upper boundary curve (14B) and/or the lower boundary curve (16A) run/runs rectilinearly at a consistent height on the front passenger's side (B) over a length in a range between 10% and 40%, preferably between 15% and 25%, of an overall width of the windscreen (10).

4. The motor vehicle according to one of the preceding claims, wherein:
the main viewing region (14) on the front passenger's side (B) has a height (H1) in a range between 90 cm and 130 cm, preferably between 100 cm and 120 cm; and/or
the main viewing region (14) on the front passenger's side (B) has a height (H1) in a range between 70% and 95%, preferably between 80% and 90%, of an overall height of the windscreen (10); and/or
the main viewing region (14) on the driver's side (A) has a height (H2) in a range between 60 cm and 100 cm, preferably between 70 cm and 90 cm; and/or the main viewing region (14) on the driver's side (A) has a height (H2) in a range between 40% and 80%, preferably 50% and 70%, of an overall height of the windscreen (10); and/or
the upper region (16) on the front passenger's side (B) has a height (H3) in a range between 2 cm and 12 cm, preferably between 5 cm and 9 cm; and/or
the upper regiom (16) on the front passenger's side (B) has a height (H3) in a range between 2% and 15%, preferably between 3% and 10%, of an overall height of the windscreen (10); and/or
the upper region (16) on the driver's side (A) has a height (H4) in a range between 15 cm and 55 cm, preferably between 25 cm and 45 cm; and/or
the upper region (16) on the driver's side (A) has a height (H4) in a range between 15% and 40%, preferably between 20% and 35%, of an overall height of the windscreen (10).

5. The motor vehicle according to one of the preceding claims, wherein:
the upper boundary curve (14B) and/or the lower boundary curve (16A) extend/extends rectilinearly at a substantially consistent height on the driver's side (A).

6. The motor vehicle according to one of the preceding claims, wherein:
a height of the upper boundary curve (14B) and/or of the lower boundary curve (16A) increase/increases in a transition region (U) in a direction towards the front passenger's side (B).

7. The motor vehicle according to Claim 6, wherein:
the transition region (U) is angled with respect to a horizontal, preferably at an angle of between 20° and 60°, preferably between 30° and 50°; and/or the transition region (U) has a length between 20 cm and 50 cm, preferably between 30 cm and 40 cm; and/or
the transition region (U) is substantially rectilinear; and/or
the transition region (U) is adjacent to a rectilinear region, running at the same height, of the upper boundary curve (14B) and/or of the lower boundary curve (16A) on the driver's side (A); and/or
the transition region (U) is adjacent to a rectilinear region, running at the same height, on the front passenger's side (B) of the upper boundary curve (14B) and/or of the lower boundary curve (16A), and/or
the transition region (U) is arranged substantially on the front passenger's side (B) and/or is arranged excentrically with respect to a central vertical plane (M) of the windscreen (10).

8. The motor vehicle according to one of the preceding claims, wherein:
the windscreen (10) is designed as a vertical windscreen for installation in a substantially vertical orientation; and/or
the windscreen (10) is designed as a windscreen of a driver's cab of a commercial vehicle, preferably a windscreen of a driver's cab of a lorry; and/or
the windscreen (10) has an overall height in a range between 105 cm and 145 cm, preferably between 115 cm and 135 cm, and/or an overall width in a range between 205 cm and 245 cm, preferably between 215 cm and 235 cm; and/or
the windscreen (10) is curved; and/or
the upper region (16) is designed to reflect sun rays and/or to absorb sun rays; and/or
the upper region (16) and the main viewing region (14) are formed integrally in one piece with each other.

9. The motor vehicle according to one of the preceding claims, wherein:
the upper region (16) above the main viewing region (14) is arranged adjacent to the main viewing region (14); and/or
the upper boundary curve (14B) and/or the lower boundary curve (16A) are/is continuous or continuous at least in sections; and/or
the upper boundary curve (14B) coincides with the lower boundary curve (16A); and/or
the driver's side (A) and the front passenger's side (B) of the windscreen (10) are formed integrally in one piece with each other.

10. The motor vehicle according to one of the preceding claims, wherein:
the upper region (16) extends as a continuous strip or as a strip which is continuous at least in sections from the driver's side (A) to the front passenger's side (B); and/or
the main viewing region (14) extends as a continuous strip or as a strip which is continuous at least in sections from the driver's side (A) to the front passenger's side (B).

11. The motor vehicle according to one of the preceding claims, wherein:
the upper region (16) is reduced in light transmission by application of a coating, preferably is substantially opaque or tinted, preferably by means of printing or by means of application of foil.

12. The motor vehicle according to one of the preceding claims, wherein:
the at least one operating and/or installation component (18) is arranged adjacent to the lower boundary curve (16A) and/or to the upper boundary curve (14B).

13. The motor vehicle according to one of the preceding claims, wherein:
the upper boundary curve (14B) and/or the lower boundary curve (16A) on the front passenger's side (B) run/runs at a height higher than 170 cm, 175 cm, 180 cm and/or 185 cm, as measured from an interior floor of a driver's cab (12) of the commercial vehicle in a vertical direction to the upper boundary curve (14B) and/or the lower boundary curve (16A); and/or
the upper boundary curve (14B) and/or the lower boundary curve (16A) on the driver's side (A) run/runs at a height lower than 140 cm, 135 cm, 130 cm, 125 cm and/or 120 cm, as measured from an interior floor of a driver's cab (12) of the commercial vehicle in a vertical direction to the upper boundary curve (14B) and/or the lower boundary curve (16A).

14. The motor vehicle according to one of the preceding claims, furthermore having:
a windscreen wiper device (22) which is arranged and designed for substantially completely sweeping over the main viewing region (14) and for only partially sweeping over the upper region (16).

## Revendications

1. Véhicule automobile, de préférence véhicule utilitaire, de préférence poids lourd ou omnibus, comprenant un pare-brise (10), le pare-brise (10) comprenant :
une zone supérieure (16) de préférence sensiblement opaque ou teintée, qui présente une plus faible transmission de la lumière qu'une zone de vision principale (14) du pare-brise (10) et est limitée dans une direction verticale vers le bas par une courbe de limitation inférieure (16A), la courbe de limitation inférieure (16A) s'étendant à une hauteur différente sur un côté passager avant (B) du pare-brise (10) et un côté conducteur (A) du pare-brise (10), et de préférence la zone de vision principale (14) étant transparente et
étant limitée dans une direction verticale vers le haut par une courbe de limitation supérieure (14B), la courbe de limitation supérieure (14B) s'étendant à une hauteur différente sur un côté passager avant (B) du pare-brise (10) et un côté conducteur (A) du pare-brise (10);
le véhicule automobile comprenant en outre :
au moins un composant de commande et/ou encastré (18) destiné à être utilisé par un conducteur du véhicule automobile, l'au moins un composant de commande et/ou encastré (18) étant disposé, sur le côté intérieur de la cabine de conducteur, derrière la zone supérieure (16) à la même hauteur que la zone supérieure (16) sur le côté conducteur (A) du pare-brise (10),
**caractérisé en ce**
**qu'**une isolation thermique et/ou un calorifugeage (20) est/sont disposé(e)(s) entre l'au moins un composant de commande et/ou encastré (18) et la zone supérieure (16), et/ou
le composant de commande et/ou encastré (18) comprend un pare-soleil, un pare-soleil enroulable, une ou plusieurs possibilités de rangement, un tachygraphe, un système pour péage, un système de gestion de parc de véhicules et/ou un système radio.

2. Véhicule automobile selon la revendication 1, dans lequel :
la courbe de limitation supérieure (14B) s'étend plus haut sur le côté passager avant (B) que sur le côté conducteur (A) ; et/ou
la courbe de limitation inférieure (16A) s'étend plus haut sur le côté passager avant (B) que sur le côté conducteur (A) ; et/ou
la courbe de limitation supérieure (14B) et/ou la courbe de limitation inférieure (16A) s'étend(ent) de manière asymétrique.

3. Véhicule automobile selon la revendication 1 ou la revendication 2, dans lequel
la courbe de limitation supérieure (14B) et/ou la courbe de limitation inférieure (16A) s'étend(ent) plus haut d'au moins 20 cm, de préférence d'au moins 25 cm, sur le côté passager avant (B) que sur le côté conducteur (A) ; et/ou
la courbe de limitation supérieure (14B) et/ou la courbe de limitation inférieure (16A) s'étend(ent) plus haut d'entre 15 % et 35 %, de préférence d'entre 20 % et 30 %, d'une hauteur totale du pare-brise (10) sur le côté passager avant (B) que sur le côté conducteur (A) ; et/ou la courbe de limitation supérieure (14B) et/ou la courbe de limitation inférieure (16A) sur le côté conducteur (A) s'étend(ent) de manière rectiligne à une hauteur constante sur une longueur dans une plage comprise entre 90 cm et 140 cm, de préférence entre 100 cm et 120 cm ; et/ou
la courbe de limitation supérieure (14B) et/ou la courbe de limitation inférieure (16A) sur le côté conducteur (A) s'étend(ent) de manière rectiligne à une hauteur constante sur une longueur dans une plage comprise entre 40 % et 50 %, de préférence entre 45 % et 50 %, d'une largeur totale du pare-brise (10) ; et/ou la courbe de limitation supérieure (14B) et/ou la courbe de limitation inférieure (16A) sur le côté passager avant (B) s'étend(ent) de manière rectiligne à une hauteur constante sur une longueur dans une plage comprise entre 20 cm et 60 cm, de préférence entre 30 cm et 50 cm ; et/ou
la courbe de limitation supérieure (14B) et/ou la courbe de limitation inférieure (16A) sur le côté passager avant (B) s'étend(ent) de manière rectiligne à une hauteur constante sur une longueur dans une plage comprise entre 10 % et 40 %, de préférence entre 15 % et 25 %, d'une largeur totale du pare-brise (10).

4. Véhicule automobile selon l'une des revendications précédentes, dans lequel :
la zone de vision principale (14) sur le côté passager avant (B) présente une hauteur (H1) dans une plage comprise entre 90 cm et 130 cm, de préférence entre 100 cm et 120 cm ; et/ou
la zone de vision principale (14) sur le côté passager avant (B) présente une hauteur (H1) dans une plage comprise entre 70 % et 95 %, de préférence entre 80 % et 90 %, d'une hauteur totale du pare-brise (10) ; et/ou la zone de vision principale (14) sur le côté conducteur (A) présente une hauteur (H2) dans une plage comprise entre 60 cm et 100 cm, de préférence entre 70 cm et 90 cm ; et/ou
la zone de vision principale (14) sur le côté conducteur (A) présente une hauteur (H2) dans une plage comprise entre 40 % et 80 %, de préférence entre 50 % et 70 %, d'une hauteur totale du pare-brise (10) ; et/ou la zone supérieure (16) sur le côté passager avant (B) présente une hauteur (H3) dans une plage comprise entre 2 cm et 12 cm, de préférence entre 5 cm et 9 cm ; et/ou la zone supérieure (16) sur le côté passager avant (B) présente une hauteur (H3) dans une plage comprise entre 2 % et 15 %, de préférence entre 3 % et 10 %, d'une hauteur totale du pare-brise (10) ; et/ou
la zone supérieure (16) sur le côté conducteur (A) présente une hauteur (H4) dans une plage comprise entre 15 cm et 55 cm, de préférence entre 25 cm et 45 cm ; et/ou
la zone supérieure (16) sur le côté conducteur (A) présente une hauteur (H4) dans une plage comprise entre 15 % et 40 %, de préférence entre 20 % et 35 %, d'une hauteur totale du pare-brise (10).

5. Véhicule automobile selon l'une des revendications précédentes, dans lequel :
la courbe de limitation supérieure (14B) et/ou la courbe de limitation inférieure (16A) s'étend(ent) de manière rectiligne à une hauteur sensiblement constante sur le côté conducteur (A).

6. Véhicule automobile selon l'une des revendications précédentes, dans lequel :
une hauteur de la courbe de limitation supérieure (14B) et/ou de la courbe de limitation inférieure (16A) augmente dans une direction vers le côté passager avant (B) dans une zone de transition (U).

7. Véhicule automobile selon la revendication 6, dans lequel :
la zone de transition (U) est inclinée par rapport à l'horizontale, de préférence suivant un angle compris entre 20° et 60°, de préférence entre 30° et 50° ; et/ou la zone de transition (U) présente une longueur comprise entre 20 cm et 50 cm, de préférence entre 30 cm et 40 cm ; et/ou
la zone de transition (U) est sensiblement rectiligne ; et/ou
la zone de transition (U) est adjacente à une zone rectiligne, s'étendant à la même hauteur, de la courbe de limitation supérieure (14B) et/ou de la courbe de limitation inférieure (16A) sur le côté conducteur (A) ; et/ou
la zone de transition (U) est adjacente à une zone rectiligne, s'étendant à la même hauteur, sur le côté passager avant (B) de la courbe de limitation supérieure (14B) et/ou de la courbe de limitation inférieure (16A) et/ou
la zone de transition (U) est disposée sensiblement sur le côté passager avant (B) et/ou disposée de manière excentrique par rapport à un plan vertical médian (M) du pare-brise (10).

8. Véhicule automobile selon l'une des revendications précédentes, dans lequel :
le pare-brise (10) est réalisé sous la forme d'un pare-brise vertical destiné à être installé dans une orientation sensiblement verticale ; et/ou le pare-brise (10) est configuré comme un pare-brise de cabine de conducteur de véhicule utilitaire, de préférence un pare-brise de cabine de conducteur de poids lourd ; et/ou
le pare-brise (10) présente une hauteur totale dans une plage comprise entre 105 cm et 145 cm, de préférence entre 115 cm et 135 cm, et/ou une largeur totale dans une plage comprise entre 205 cm et 245 cm, de préférence entre 215 cm et 235 cm ; et/ou
le pare-brise (10) est bombé ; et/ou
la zone supérieure (16) est réalisée de manière à réfléchir les rayons solaires et/ou de manière à absorber les rayons solaires ; et/ou
la zone supérieure (16) et la zone de vision principale (14) sont réalisées intégralement d'une seule pièce l'une avec l'autre.

9. Véhicule automobile selon l'une des revendications précédentes, dans lequel :
la zone supérieure (16) est disposée au-dessus de la zone de vision principale (14) de manière adjacente à la zone de vision principale (14) ; et/ou
la courbe de limitation supérieure (14B) et/ou la courbe de limitation inférieure (16A) est/sont continue(s) ou
continue(s) au moins dans certaines parties ; et/ou
la courbe de limitation supérieure (14B) coïncide avec la courbe de limitation inférieure (16A) ; et/ou
le côté conducteur (A) et le côté passager avant (B) du pare-brise (10) sont réalisés intégralement d'une seule pièce l'un avec l'autre.

10. Véhicule automobile selon l'une des revendications précédentes, dans lequel :
la zone supérieure (16) s'étend comme bande continue ou comme bande continue au moins dans certaines parties à partir du côté conducteur (A) jusqu'au côté passager avant (B) ; et/ou
la zone de vision principale (14) s'étend comme bande continue ou comme bande continue au moins dans certaines parties à partir du côté conducteur (A) jusqu'au côté passager avant (B).

11. Véhicule automobile selon l'une des revendications précédentes, dans lequel :
la zone supérieure (16) présente une transmission de lumière réduite par application d'un revêtement, de préférence est sensiblement opaque ou teintée, de préférence par impression ou par pelliculage.

12. Véhicule automobile selon l'une des revendications précédentes, dans lequel :
l'au moins un composant de commande et/ou encastré (18) est disposé de manière adjacente à la courbe de limitation inférieure (16A) et/ou à la courbe de limitation supérieure (14B).

13. Véhicule automobile selon l'une des revendications précédentes, dans lequel :
la courbe de limitation supérieure (14B) et/ou la courbe de limitation inférieure (16A) s'étend(ent) sur le côté passager avant (B) à une hauteur supérieure à 170 cm, 175 cm, 180 cm et/ou 185 cm, mesurée à partir d'un plancher inférieur d'une cabine de conducteur (12) du véhicule utilitaire dans une direction verticale jusqu'à la courbe de limitation supérieure (14B) et/ou la courbe de limitation inférieure (16A) ; et/ou
la courbe de limitation supérieure (14B) et/ou la courbe de limitation inférieure (16A) s'étend(ent) sur le côté conducteur (A) à une hauteur inférieure à 140 cm, 135 cm, 130 cm, 125 et/ou 120 cm, mesurée à partir d'un plancher inférieur d'une cabine de conducteur (12) du véhicule utilitaire dans une direction verticale jusqu'à la courbe de limitation supérieure (14B) et/ou la courbe de limitation inférieure (16A).

14. Véhicule automobile selon l'une des revendications précédentes, comprenant en outre :
un dispositif d'essuie-glace (22) qui est disposé et réalisé pour recouvrir sensiblement complètement la zone de vision principale (14) et pour ne recouvrir que partiellement la zone supérieure (16).
